# EUROPÄISCHE PATENTSCHRIFT

(11) **EP 1 179 663 B1**
(45) Veröffentlichungstag und Bekanntmachung des Hinweises auf die Patenterteilung: **10.05.2006**
(21) Anmeldenummer: 01115989.4
(22) Anmeldetag: 30.06.2001
(51) Int. Cl.: F02B 75/32, F16J 7/00, F16C 9/04

(54) **Pleuel für eine Brennkraftmaschine, insbesondere V-Motor**
Connecting rod for a V-type combustion engine
Bielle pour un moteur à combustion avec cylindres en V

(30) Priorität: 10.08.2000 DE 10039022
(43) Veröffentlichungstag der Anmeldung: 13.02.2002
(73) Patentinhaber: Bayerische Motoren Werke Aktiengesellschaft, 80809 München (DE)
(72) Erfinder: Kirsch, Rudolf, 85302 Gerolsbach (DE)

(56) Entgegenhaltungen:
- EP-B- 0 470 721
- DE-A- 4 025 927
- DE-C- 865 686
- US-A- 2 344 275

## Beschreibung

Die Erfindung bezieht sich nach dem Oberbegriff des Patentanspruches 1 auf ein Pleuel für eine Brennkraftmaschine, insbesondere V-Motor, bei dem zu einer ein Pleuelauge mittig durchsetzenden Gaskraft-Wirkebene ein Pleuel-Hauptlager aussermittig gestaltet ist, wobei das zweiteilig ausgebildete, verschraubbare Hauptlager mit einem Gleitlager ausgerüstet ist.

Ein derartiges Pleuel ist beispielsweise aus der DE 40 25 927 A1 bekannt, wobei die aussermittige Gestaltung des Pleul-Hauptlagers sich durch einen einseitigen Materialabtrag an der Stirnseite des Hauptlagers ergibt. Weiter ist es bei einem derartigen, zweiteilig ausgebildeten und verschraubbaren Hauptlager üblich, die Verschraubung in die Gaskraft-Wirkebene des Pleuels zu legen, so dass mit der Gaskraft-Wirkebene die Schraubenkraft-Wirkebene zusammenfällt. Ferner ist es auch üblich, die Schmierölzufuhr über den Hubzapfen einer Kurbelwelle in der Gaskraft-Wirkebene vorzusehen.

Der Erfindung liegt die Aufgabe zu Grunde, bei einem gattungsgemäßen Pleuel mit einem in seiner Breite voll ausgebildeten Pleuel-Hauptlager eine der aussermittig wirkenden Gaskraft-Wirkebene angepasste Gleitlager-Gestaltung aufzuzeigen.

Diese Aufgabe ist mit dem Patentanspruch 1 dadurch gelöst, dass ein mit seiner bezogen auf die Lagerbreite mittigen Schraubenkraft-Wirkebene relativ zur Gaskraft-Wirkebene aussermittig versetzt angeordnetes Pleuel-Hauptlager mit einem Gleitlager ausgerüstet ist, das eine zur Gaskraft-Wirkebene symmetrisch ausgebildete Gleitlager-Lauffläche aufweist.

Mit der Erfindung ist der Vorteil erreicht, dass die Mitte der hydraulisch wirksamen Lagerbreite und die Mitte des Pleuelauges bzw. zur Gaskraft-Wirkebene symmetrisch angeordnet bleibt und somit ein Kippen des Pleuels vermieden ist.

Eine vorteilhafte Ausgestaltung der Erfindung ist weiter dadurch erreicht, dass das Gleitlager sich über die Lagerbreite des Pleuel-Hauptlagers erstreckt, wobei die symmetrisch wirksame Gleitlager-Lauffläche mittels einer umfänglichen Ausnehmung in einem von der Gaskraft-Wirkebene entfernten Endbereich des Gleitlagers erzielt ist.

Mit dieser Ausgestaltung ist ein Gleitlager mit einer in der Herstellung einfachen gestuften Lagerbohrung erzielt.

Besonders vorteilhaft wirkt sich die Erfindung bei Verwendung eines Gleitlagers als Mehrschichtlager mit einem Stahlrücken aus, der sich über die Lagerbreite des Pleuel-Hauptlagers erstreckt, der erfindungsgemäß über die Schraubenkraft-Wirkebene symmetrisch gepresst ist. Mit dieser Ausgestaltung ist in Verbindung mit dem zur Gaskraft-Wirkebene symmetrischen Schmiermittel-Druckverlauf in vorteilhafter Weise bei gewichtserleichterten, insbesondere biegeweichem Pleuel eine einseitig trichterförmige Aufweitung des Pleuel-Hauptlagers sicher vermieden.

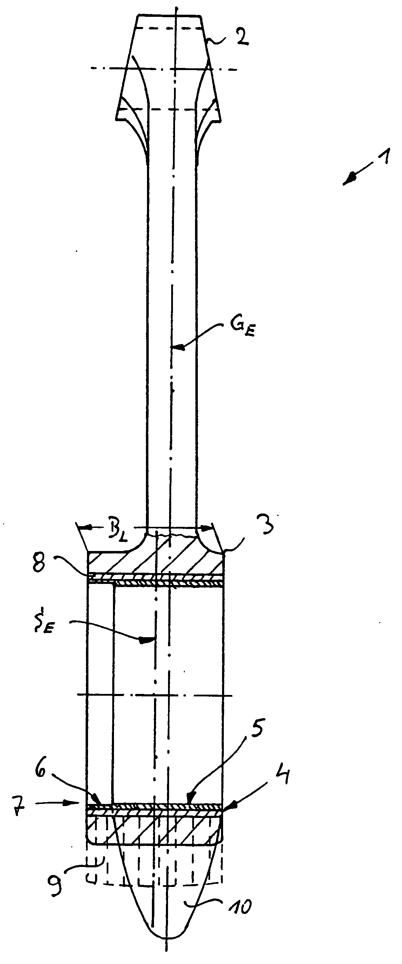

Die Erfindung ist an Hand eines in der Zeichnung dargestellten Ausführungsbeispiels beschrieben.

Ein Pleuel (1) für eine nicht gezeigte Brennkraftmaschine, insbesondere V-Motor, umfasst ein Pleuel-Auge (2) mit einer dieses mittig durchsetzenden Gaskraft-Wirkebene G_{E}, zu dem ein - unmaßstäblich gezeichnetes - Pleuel-Hauptlager (3) aussermittig gestaltet ist. Das in bekannter Weise zweiteilig ausgebildete und verschraubbare Pleuel-Hauptlager (3) ist mit einem Gleitlager (4) ausgerüstet.

Für ein vorzugsweise gewichtoptimiertes, biegeweiches Pleuel (1) mit in seiner Lagerbreite B_{L} voll ausgebildetem Pleuel-Hauptlager (3) ist eine der aussermittig wirkenden Gaskraft-Wirkebene G_{E} angepasste Gleitlager-Gestaltung aufzuzeigen mit dem Ziel, Kippmomente und damit verbundene Deformationen des Hauptlagers (3) zu vermeiden.

Erfindungsgemäß ist ein mit seiner bezogen auf die Lagerbreite B_{L} mittigen Schraubenkraft-Wirkebene S_{E} relativ zur Gaskraft-Wirkebene G_{E} aussermittig versetzt angeordnetes Pleuel-Hauptlager (3) mit einem Gleitlager (4) ausgerüstet ist, das eine zur Gaskraft-Wirkebene G_{E} symmetrisch ausgebildete Gleitlager-Lauffläche (5) aufweist.

Diese Gleitlager-Lauffläche (5) ist erfindungsgemäß dadurch erreicht, dass die symmetrisch wirksame Gleitlager-Lauffläche (5) mittels einer umfänglichen Ausnehmung (6) in einem von der Gaskraft-Wirkebene G_{E} entfernten Endbereich (7) des Gleitlagers (4) angeordnet ist.

Die Erfindung kommt besonders vorteilhaft bei einem Gleitlager (4) zum Tragen, das aus einem Mehrschichtlager mit einem Stahlrücken (8) ausgebildet ist, der sich über die Lagerbreite B_{L} des Pleuel-Hauplagers (3) erstreckt. Mit dieser Anordnung ergibt sich bei zur Lagerbreite B_{L} mittig angeordneter, nicht gezeigeter Verschraubung zu deren Schraubenkraft-Wirkebene S_{E} eine symmetrische Pressung des Gleitlagers (4) gemäß dem durch strichlierte Linien angedeuteten Spannungsverlauf gemäß der Fläche (9). Der zur Gaskraft-Wirkebene G_{E} symmetrische Schmiermittel-Druckverlauf ist durch die Fläche (10) unter der durchgezogenen Kurve versinnbildlicht.

Mit dieser erfindungsgemäßen Trennung der Funktionen der hydraulischen Lagerung des Pleuels (1) einerseits und eines Festsitzes des Gleitlagers (4) im Pleuel-Hauptlager (3) durch radiale Verpressung andererseits behält das Gleitlager (4) in vorteilhafter Weise seine zylindrische Form bei und eine aus dem asymmetrischen Kraftfluss in der Gaskraft-Wirkebene G_{E} mögliche kegelförmige Verformung des Gleitlagers (4) ist sicher vermieden.

Vorzugsweise findet das erfindungsgemäße Pleuel bei V-Motoren Verwendung, insbesondere in einer V-Motorenfamilie.

## Patentansprüche

1. Pleuel für eine Brennkraftmaschine, insbesondere V-Motor,
- bei dem zu einer ein Pleuelauge (2) mittig durchsetzenden Gaskraft-Wirkebene (G_{E}) ein Pleuel-Hauptlager (3) aussermittig gestaltet ist, wobei
- das zweiteilig ausgebildete, verschraubbare Pleuel-Hauptlager (3) mit einem Gleitlager (4) ausgerüstet ist,
**dadurch gekennzeichnet**
- **dass** das Pleuel-Hauptlager (3) mit seiner bezogen auf die Lagerbreite (B_{L}) mittigen Schraubenkraft-Wirkebene (S_{E}) relativ zur Gaskraft-Wirkebene (G_{E}) aussermittig versetzt angeordnet ist und das Gleitlager (4) eine zur Gaskraft-Wirkebene (G_{E}) symmetrisch ausgebildete Gleitlager-Lauffläche (5) aufweist.

2. Pleuel nach Anspruch 1,
**dadurch gekennzeichnet,**
- **dass** das Gleitlager (4) sich über die Lagerbreite (B_{L}) des Pleuel-Hauptlagers (3) erstreckt, wobei
- die symmetrisch wirksame Gleitlager-Lauffläche (5) mittels einer umfänglichen Ausnehmung (6) in einem von der Gaskraft-Wirkebene (G_{E}) entfernten Endbereich (7) des Gleitlagers (4) erzielt ist.

3. Pleuel nach Anspruch 1 und 2,
**dadurch gekennzeichnet,**
- **dass** das Gleitlager (4) ein Mehrschichtlager mit einem Stahlrücken (8) ist, der
- sich über die Lagerbreiete (B_{L}) des Pleuel-Hauptlagers (3) erstreckt.

## Claims

1. A connecting rod for an internal combustion engine, especially a V-type engine,
- wherein a connecting-rod bearing (3) is eccentrically shaped relative to a gas force operative plane (G_{E}) extending centrally through a connecting-rod eye (2), wherein
- the connecting-rod bearing (3), which is screwable and in two parts, is equipped with a sliding bearing (4),
**characterised in that** the connecting-rod bearing (3) is disposed so that its screw force operative plane (S_{E}), which is central relative to the bearing width (B_{L}), is eccentric relative to the gas force operative plane (G_{E}), and the sliding bearing (4) has a symmetrical sliding-bearing surface (5) relative to the gas force operative plane (G_{E}).

2. A connecting rod according to claim 1,
**characterised in that**
- the sliding bearing (4) extends across the width (B_{L}) of the connecting-rod bearing (3), wherein
- the symmetrically operative sliding-bearing surface (5) is obtained by means of a peripheral recess (6) in an end region (7) of the sliding bearing (4) remote from the gas force operative plane (G_{E}).

3. A connecting rod according to claims 1 and 2,
**characterised in that**
- the sliding bearing (4) is a multi-layer bearing with a steel back (8), which
- extends over the bearing width (B_{L}) of the connecting-rod bearing (3).

## Revendications

1. Bielle pour un moteur à combustion avec cylindres en V, dans laquelle
- un coussinet principal de bielle (3) est excentré par rapport à un plan d'action de la force des gaz (G_{E}) traversant de manière centrée une tête de bielle (2), et
- le coussinet principal de bielle (3) conçu en deux parties vissées étant équipé d'un palier lisse (4),
**caractérisée en ce que**
- le coussinet principal de bielle (3) est disposé avec son plan d'action de la force de vissage (SE) centré sur la largeur du palier (B_{L}) en étant décalé de manière excentrée par rapport au plan d'action de la force des gaz (G_{E}), et le palier lisse (4) présente une bande de roulement de palier lisse (5) symétrique au plan d'action de la force des gaz (G_{E}).

2. Bielle selon la revendication 1,
**caractérisée en ce que**
- le palier lisse (4) s'étend sur la largeur de palier (B_{L}) du coussinet principal de bielle (3), et
- la bande de roulement de palier lisse (5) à action symétrique est obtenue à l'aide d'un évidement périphérique (6) dans une zone terminale (7) du palier lisse (4) éloignée du plan d'action de la force des gaz (G_{E}).

3. Bielle selon la revendication 1 et 2,
**caractérisée en ce que**
le palier lisse (4) est un coussinet multicouche avec un dos en acier (8) qui s'étend sur la largeur (B_{L}) du palier principal de bielle (3).
